(19) Europäisches Patentamt
European Patent Office
Office européen des brevets

(11) **EP 3 281 699 A1**

(12) **EUROPÄISCHE PATENTANMELDUNG**

(43) Veröffentlichungstag:
**14.02.2018 Patentblatt 2018/07**

(51) Int Cl.:
*B01J 35/00* (2006.01)    *B01J 37/02* (2006.01)
*B01J 29/72* (2006.01)    *B01J 29/56* (2006.01)
*B01J 29/85* (2006.01)    *B01J 29/83* (2006.01)
*B01J 29/89* (2006.01)    *B01D 53/94* (2006.01)
*B01J 35/04* (2006.01)    *F01N 3/20* (2006.01)

(21) Anmeldenummer: **16183868.5**

(22) Anmeldetag: **11.08.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Umicore AG & Co. KG**
**63457 Hanau-Wolfgang (DE)**

(72) Erfinder:
• SCHULER, Anke
63843 Niedernberg (DE)
• ADELMANN, Katja
63452 Hanau (DE)
• DORNHAUS, Franz
Higashinada-ku, Kobe, 658-0063 (JP)
• SCHIFFER, Michael
63450 Hanau (DE)
• ECKHOFF, Stephan
63755 Alzenau (DE)

(54) **PARTIKELFILTER MIT SCR-AKTIVER BESCHICHTUNG**

(57) Die vorliegende Erfindung betrifft Partikelfilter, das einen Wandflussfilter und SCR-aktives Material umfasst, wobei das Wandflussfilter Kanäle umfasst, die sich parallel zwischen einem ersten und einem zweiten Ende des Wandflussfilters erstrecken, die abwechselnd entweder am ersten oder am zweiten Ende gasdicht verschlossen sind und die durch poröse Wände getrennt sind, deren Poren innere Oberflächen aufweisen, und das SCR-aktive Material sich in Form einer Beschichtung auf den inneren Oberflächen der Poren der porösen Wände befindet, dadurch gekennzeichnet, dass die Beschichtung einen Gradienten aufweist, so dass die dem Abgas zugewandte Seite der Beschichtung eine höhere Selektivität in der SCR-Reaktion aufweist, als die den inneren Oberflächen der Poren zugewandte Seite der Beschichtung. Das SCR-Aktive Material ist bevorgugt einen kleinporigen Zeolithen, der eine maximale eine Ringgröße von acht tetraedrischen Atomen aufweist und mit Kupfer und/oder Eisen ausgetauscht ist.

Figur 1

EP 3 281 699 A1

**Beschreibung**

Die vorliegende Erfindung betrifft ein Partikelfilter mit SCR-aktiver Beschichtung zur gleichzeitigen Verminderung von Partikeln und Stickoxiden im Abgas von Verbrennungsmotoren.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation relativ leicht unschädlich gemacht werden, die Reduktion der Stickoxide zu Stickstoff gestaltet sich jedoch wesentlich schwieriger.

Ein bekanntes Verfahren zur Entfernung von Stickoxiden aus Abgasen in Gegenwart von Sauerstoff ist das Verfahren der selektiven katalytischen Reduktion (SCR-Verfahren) mittels Ammoniak an einem geeigneten Katalysator, dem SCR-Katalysator. Bei diesem Verfahren werden die aus dem Abgas zu entfernenden Stickoxide mit Ammoniak zu Stickstoff und Wasser umgesetzt.
Das als Reduktionsmittel verwendete Ammoniak kann durch Eindosierung einer zu Ammoniak zersetzlichen Verbindung, wie beispielsweise Harnstoff, Ammoniumcarbamat oder Ammoniumformiat, in den Abgasstrang und anschließende Hydrolyse verfügbar gemacht werden.

Partikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters gasdicht verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten.

Es ist auch bereits bekannt, Wandflussfilter mit SCR-aktivem Material zu beschichten und so Partikel und Stickoxide gleichzeitig aus dem Abgas zu entfernen.
Sofern die erforderliche Menge an SCR-aktivem Material auf die porösen Wände zwischen den Kanälen aufgebracht wird, kann dies allerdings zu einer inakzeptablen Erhöhung des Gegendrucks des Filters führen.
Vor diesem Hintergrund schlagen beispielsweise die JPH01-151706 und die WO2005/016497 vor, einen Wandflussfilter dergestalt mit einem SCR-Katalysator zu beschichten, dass letzterer die porösen Wände durchdringt. Die porösen Wände des Wandflussfilters sollen zu diesem Zweck eine Porosität von mindestens 50% und eine durchschnittliche Porengröße von mindestens 5 Micron aufweisen.
Es ist auch schon vorgeschlagen worden, siehe US 2011/274601, einen ersten SCR-Katalysator in die poröse Wand einzubringen, d.h. die inneren Oberflächen der Poren zu beschichten und einen zweiten SCR-Katalysator auf der Oberfläche der porösen Wand zu platzieren. Dabei ist die mittlere Partikelgröße des ersten SCR-Katalysators kleiner als die des zweiten SCR-Katalysators.

Die bekannten mit SCR-Katalysatoren beschichteten Wandflussfilter haben den Nachteil, dass ihre Selektivität in der SCR-Reaktion gegenüber der unerwünschten Oxidation von Ammoniak insbesondere bei hohen Temperaturen zu gering ist.

Die Aufgabe der vorliegenden Erfindung besteht somit darin, mit SCR-aktivem Material beschichtete Wandflussfilter zur Verfügung zu stellen, die eine verbesserte Selektivität in der SCR-Reaktion, insbesondere bei Temperaturen von über 600°C, aufweisen.

Die vorliegende Erfindung betrifft ein Partikelfilter, das einen Wandflussfilter und SCR-aktives Material umfasst, wobei
das Wandflussfilter Kanäle umfasst, die sich parallel zwischen einem ersten und einem zweiten Ende des Wandflussfilters erstrecken, die abwechselnd entweder am ersten oder am zweiten Ende gasdicht verschlossen sind und die durch poröse Wände getrennt sind, deren Poren innere Oberflächen aufweisen,
und das SCR-aktive Material sich in Form einer Beschichtung auf den inneren Oberflächen der Poren der porösen Wände befindet,
dadurch gekennzeichnet, dass die Beschichtung einen Gradienten aufweist, so dass die dem Abgas zugewandte Seite der Beschichtung eine höhere Selektivität in der SCR-Reaktion aufweist, als die den inneren Oberflächen der Poren zugewandte Seite der Beschichtung.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit. Sie weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.
In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Als SCR-aktives Material können erfindungsgemäß prinzipiell alle bekannten SCR-katalytisch aktiven Materialien verwendet werden.

Beispiele sind etwa Vanadium-haltige oder Vanadium-freie Mischoxide, wie sie beispielsweise aus WO2008/049491 A1, WO2008/061752 A2, WO2011/116907 A2 und WO2011/131324 A1 bekannt sind, sowie Mischungen von Mischoxiden mit SCR-Katalysatoren auf Zeolith-Basis, wie sie zum Beispiel aus WO2009/124643 A1, EP 2 335 810 A1 und WO2012/168277 A1 bekannt sind.

In besonderen Ausführungsformen der vorliegenden Erfindung umfasst das SCR-aktive Material einen kleinporigen Zeolithen, der mit Kupfer und/oder Eisen ausgetauscht ist.

Kleinporige Zeolithe weisen eine maximalen Ringgröße von acht tetraedrischen Atomen auf. Fachmann bekannten Zeolithe dieser Art können verwendet werden. Dazu gehören natürlich vorkommende, bevorzugt aber synthetisch hergestellte kleinporige Zeolithe.

Beispiele für synthetisch hergestellte kleinporige Zeolithe gehören den Strukturtypen ABW, ACO, AEI, AEN, AFN, AFT, AFX, ANA, APC, APD, ATN, ATT, ATV, AWO, AWW, BIK, BRE, CAS, CDO CHA, DDR, DFT, EAB, EDI, EPI, ERI, ESV, GIS, GOO, IHW, ITE, ITW, JBW, KFI, LEV, LTA, LTJ, MER, MON, MTF, NSI, OWE, PAU, PHI, RHO, RTE, RTH, SAS, SAT, SAV, SIV, THO, TSC, UEI, UFI, VNI, YUG und ZON an.

Bevorzugte kleinporige Zeolithe sind solche, die den Strukturtypen AEI, CHA (Chabazit), ERI (Erionit), LEV (Levyne), AFX, DDR und KFI angehören. Besonders bevorzugt sind die Strukturtypen CHA, AEI, ERI und LEV, ganz besonders bevorzugt CHA und LEV.

Im Rahmen der vorliegenden Erfindung sollen unter den Begriff Zeolith nicht nur Aluminosilikate fallen, sondern auch Silicoaluminophosphate und Aluminophosphate, die gelegentlich auch als Zeolith-ähnliche Verbindungen bezeichnet werden.

In Ausführungsformen der vorliegenden Erfindung weisen die kleinporigen Zeolithe vom Aluminosilikat-Typ einen SAR-Wert von 5 bis 50 auf, bevorzugt von 14 bis 40, besonders bevorzugt zwischen 20 und 35.

Geeignete Silicoaluminophosphate bzw. Aluminophosphate gehören insbesondere ebenfalls den Strukturtypen AEI, CHA (Chabazit), ERI (Erionit), LEV (Levyne), AFX, DDR und KFI an. Solche Materialien können unter dem entsprechenden Three-Letter-Code der Structure Database der International Zeolite Association unter Related Materials entnommen werden (http://www.iza-structure.org/databases/).

Beispiele sind SAPO-17, SAPO-18, SAPO-34, SAPO-35, SAPO-39, SAPO-43, SAPO-47 und SAPO-56 bzw. AIPO-17, AIPO-18, AIPO-34 und AIPO-35. Für diese Materialien sind die oben erwähnten bevorzugten SAR Werte von Aluminosilikaten nicht zutreffend.

Die genannten Zeolithe sind mit Eisen und/oder Kupfer, insbesondere mit Kupfer ausgetauscht. Die Eisen- bzw. Kupfermengen betragen insbesondere 0,2 bis 6 Gew.-%, berechnet als $Fe_2O_3$ bzw. $CuO$ und bezogen auf das Gesamtgewicht des ausgetauschten Zeolithen.

Erfindungsgemäß weist die Beschichtung der inneren Oberflächen der Poren der porösen Wände mit SCR-aktivem Material einen Gradienten auf. Dieser kann kontinuierlich sein, d.h. die Selektivität des SCR-aktiven Materials verringert sich kontinuierlich von der dem Abgas zugewandten Seite der Beschichtung zu den den inneren Oberflächen der Poren zugewandten Seite der Beschichtung.

In Ausführungsformen der vorliegenden Erfindung ist der Gradient aber diskontinuierlich. Dabei besteht die Beschichtung beispielsweise aus zwei oder mehr Schichten, die sich hinsichtlich der Selektivität des SCR-aktiven Materials unterscheiden. Dabei weist die äußerste, d.h dem Abgas zugewandte Schicht die höchste Selektivität und die innerste Schicht die niedrigste Selektivität auf.

In einer besonderen Ausführungsform der vorliegenden Erfindung besteht die Beschichtung aus zwei Schichten, wobei die dem Abgas zugewandte Schicht eine höhere Selektivität in der SCR-Reaktion aufweist als die der inneren Oberfläche der Poren zugewandte Schicht.

Im Rahmen der vorliegenden Patentanmeldung ist der Begriff Selektivität definiert als der Quotient aus dem Umsatz von $NO_x$ und dem Umsatz von $NH_3$, es gilt also

$$S = X_{(NOx)} / X_{(NH3)}$$

wobei S die Selektiviät, $X_{(NOx)}$ den Umsatz von $NO_x$ in % und $X_{(NH3)}$ den Umsatz von $NH_3$ in % bedeuten.

Je größer der Quotient ist, desto selektiver ist das SCR-aktive Material bzw. die SCR-aktive Beschichtung bezüglich der erwünschten selektiven katalytischen Reaktion von $NO_x$ und $NH_3$ zu Stickstoff und Wasser gegenüber der unerwünschten Oxidation von $NH_3$ mit Sauerstoff zu Stickstoff oder sogar $NO_x$.

Zur Bestimmung von $X_{(NOx)}$ und $X_{(NH3)}$ wird mit dem SCR-aktiven Material jeder Beschichtung ein Wandflussfilter beschichtet, sodann 16 Stunden bei 800°C hydrothermal gealtert und dann der Umsatz von $NO_x$ bzw. $NH_3$ bei 500°C in einem Testgas der folgenden Zusammensetzung bestimmt:

| | |
|---|---|
| $N_2$ | Balance |
| $O_2$ | 10 Vol.-% |
| NOx | 500 ppm |
| $NO_2$ | 0 ppm |
| $NH_3$ | 750 ppm |
| CO | 350 ppm |
| $C_3H_6$ | 100 ppm |
| $H_2O$ | 5 Vol.-% |
| GHSV / h-1 | 60.000 |

Anschließend wird der Quotient $X_{(NOx)}$ / $X_{(NH3)}$ berechnet. Die Beschichtung mit dem höchsten Quotienten wird erfindungsgemäß so angeordnet, dass sie dem Abgas zugewandt ist, während die Beschichtung mit dem niedrigsten Quotienten so angeordnet wird, dass sie dem Wandflussfilter zugewandt ist.

Es ist außerdem darauf zu achten, dass neben den oben genannten Testbedingungen auch alle anderen Testbedingungen gleich sind. Insbesondere sollen identische Wandflussfilter und identische Beschichtungsverfahren verwendet werden.

Ein konkretes Beispiel für die Bestimmung des Quotienten $S = X_{(NOx)}$ / $X_{(NH3)}$ ist in Beispiel 2 beschrieben.

In einer weiteren Ausführungsform der vorliegenden Erfindung beträgt die Menge der Beschichtung mit SCR-katalytisch aktivem Material 70 bis 150, insbesondere 90 bis 130 g/L, bezogen auf das Volumen des Wandflussfilters. Sofern die Beschichtung mit SCR-katalytisch aktivem Material aus zwei Schichten besteht, so beträgt die Menge einer Schicht beispielsweise 40 bis 100 g/L und die der anderen 30 bis 50 g/L.

In einer Ausführungsform der vorliegenden Erfindung besteht die Beschichtung mit SCR-aktivem Material aus zwei Schichten, die jeweils einen mit Kupfer ausgetauschten kleinporigen Zeolithen enthalten.

Dabei enthält der kleinporige Zeolith der dem Abgas zugewandten Schicht weniger als 3, bevorzugt 0,3-2,5, besonders bevorzugt 0,5-1,5 Gew.-% Cu, berechnet als CuO und bezogen auf den ausgetauschten Zeolithen dieser Schicht, während der kleinporige Zeolith der inneren Porenoberfläche zugewandten Schicht 1 bis 6, bevorzugt 2-5, besonders bevorzugt 3-4,5 Gew.-% Cu, berechnet als CuO und bezogen auf den ausgetauschten Zeolithen dieser Schicht, enthält. Dabei sind die Mengen an Kupfer in beiden Schichten so aufeinander abzustimmen, dass die dem Abgas zugewandte Beschichtung die höhere Selektivität (wie oben beschrieben bestimmt) aufweist.

In einer besonderen Ausführungsform der Erfindung kann die dem Abgas zugewandte Schicht auch einem kleinporigen Zeolithen enthalten, welcher nicht mit Kupfer ausgetauscht wurde sondern als H-Form bzw. als $NH_4$-Form vorliegt.

In einer bevorzugten Ausführungsform der Erfindung enthält die dem Abgas zugewandte Schicht weniger Kupfer berechnet als CuO pro Gewichtseinheit Washcoat als die der inneren Porenoberfläche zugewandten Schicht.

Es ist zu berücksichtigen, dass die bevorzugte Menge an Kupfer im Verhältnis zum Zeolithen abhängig ist vom $SiO_2/Al_2O_3$-Verhältnis des Zeolithen. Im Allgemeinen gilt, dass mit zunehmenden $SiO_2/Al_2O_3$-Verhältnis des Zeolithen die Menge an austauschbarem Kupfer abnimmt. Das bevorzugte Atomverhältnis von im Zeolithen eingetauschten Kupfer zu Gerüst-Aluminium im Zeolithen, nachfolgend als Cu/Al-Verhältnis bezeichnet, liegt erfindungsgemäß insbesondere bei 0,1 bis 0,6.

Dies entspricht einem theoretischen Austauschgrad des Kupfers mit dem Zeolithen von 20% bis 120%, ausgehend von einem vollständigen Ladungsausgleich im Zeolithen durch zweiwertige Cu-Ionen bei einem Eintauschgrad von 100%.

In einer bevorzugten Ausgestaltung der Erfindung liegt das Verhältnis von eingetauschtem Kupfer zu Aluminium (Cu/Al) im Zeolithen, der in der dem Abgas zugewandte Schicht enthalten ist, bei Werten von 0,1 bis 0,3, bevorzugt bei 0,15 bis 0,25 und das Cu/Al-Verhältnis des Zeolithen, welcher in der Schicht enthalten ist, die der inneren Porenoberfläche zugewandt ist bei Werten von 0,3 bis 0,6, bevorzugt bei Werten von 0,35 bis 0,5.

In einer weiteren Ausführungsform der Erfindung enthält die dem Abgas zugewandte Schicht einen kleinporigen Zeolithen, der ein niedrigeres SiO2/Al2O3-Verhältnis (SAR) aufweist als der kleinporige Zeolith, der in der der inneren Porenoberfläche zugewandten Schicht enthalten ist.

In einer weiteren bevorzugten Ausgestaltung der Erfindung liegt die Menge der Beschichtung der dem Abgas zugewandten Schicht bei 20-70g/L, bevorzugt bei 30-60g/L und die Menge der Beschichtung der der inneren Porenoberfläche zugewandten Schicht bei 50-120g/L, bevorzugt 70-100g/L. Bevorzugt ist die Masse der Beschichtung der dem Abgas zugewandten Schicht geringer als die Masse der der inneren Porenoberfläche zugewandten Schicht.

In einer Ausführungsform der vorliegenden Erfindung besteht die Beschichtung mit SCR-aktivem Material aus zwei Schichten, die jeweils einen mit Kupfer ausgetauschten Zeolithen vom Strukturtyp CHA enthalten. Dabei enthält der Chabazit der dem Abgas zugewandten Schicht 1 Gew.-% Cu, berechnet als CuO und bezogen auf den ausgetauschten Chabaziten dieser Schicht, während der Chabazit der der inneren Porenoberfläche zugewandten Schicht 3 Gew.-% Cu, berechnet als CuO und bezogen auf den ausgetauschten Chabaziten dieser Schicht, enthält. Beide Beschichtungen liegen bevorzugt in Mengen von jeweils 50% der gesamten Beschichtungsmenge vor.

In einer anderen Ausführungsform der vorliegenden Erfindung besteht die Beschichtung mit SCR-aktivem Material aus zwei Schichten, die jeweils einen mit Kupfer ausgetauschten Zeolithen vom Strukturtyp LEV enthalten. Dabei enthält der Levyne der dem Abgas zugewandten Schicht 1 Gew.-% Cu, berechnet als CuO und bezogen auf den ausgetauschten Levyne dieser Schicht, während der Levyne der der inneren Porenoberfläche zugewandten Schicht 3 Gew.-% Cu, berechnet als CuO und bezogen auf den ausgetauschten Levyne dieser Schicht, enthält. Beide Beschichtungen liegen bevorzugt in Mengen von jeweils 50% der gesamten Beschichtungsmenge vor.

Die Herstellung des erfindungsgemäßen Partikelfilters kann nach dem Fachmann geläufigen Methoden erfolgen, so etwa nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff).

Dem Fachmann ist bekannt, dass die durchschnittliche Porengröße des Wandflussfilters und die mittlere Teilchengröße der SCR-katalytisch aktiven

Materialien so aufeinander abgestimmt werden müssen, dass eine Beschichtung der inneren Porenoberflächen erfolgt. Insbesondere muss die mittlere Teilchengröße der SCR-katalytisch aktiven Materialien klein genug sein, um in die Poren des Wandflussfilters einzudringen.

Der erfindungsgemäße Partikelfilter kann mit Vorteil zur Reinigung von Abgas von mager betriebenen Verbrennungsmotoren, insbesondere von Dieselmotoren, verwendet werden. Er entfernt Partikel aus dem Abgas und setzt im Abgas enthaltene Stickoxide in die unschädlichen Verbindungen Stickstoff und Wasser um.

Die vorliegende Erfindung betrifft demnach auch ein Verfahren zur Reinigung von Abgas von mager betriebenen Verbrennungsmotoren, das dadurch gekennzeichnet ist, dass das Abgas über ein erfindungsgemäßes Partikelfilter geleitet wird.

In der Regel geschieht diese Überleitung in Gegenwart eines Reduktionsmittels. Als Reduktionsmittel wird bei dem erfindungsgemäßen Verfahren bevorzugt Ammoniak verwendet. Der benötigte Ammoniak kann beispielsweise im Abgassystem anströmseitig zum erfindungsgemäßen Partikelfilter etwa mittels eines anströmseitigen Stickoxidspeicherkatalysators ("lean NOx trap - LNT) gebildet werden, insbesondere im Betrieb unter fetten (rich) Abgasbedingungen. Dieses Verfahren ist als "passiv SCR" bekannt.

Ammoniak kann aber auch im "aktiven SCR-Verfahren" in Form wässriger Harnstofflösung mitgeführt werden, die bedarfsgerecht über einen Injektor anströmseitig zum erfindungsgemäßen Partikelfilter eindosiert wird.

Die vorliegende Erfindung betrifft somit auch eine Vorrichtung zur Reinigung von Abgas von mager betriebenen Verbrennungsmotoren, die dadurch gekennzeichnet ist, dass sie ein erfindungsgemäßes Partikelfilter, sowie ein Mittel zur Bereitstellung eines Reduktionsmittels umfasst.

In der Regel wird als Reduktionsmittel Ammoniak verwendet. In einer Ausführungsform der erfindungsgemäßen Vorrichtung ist das Mittel zur Bereitstellung eines Reduktionsmittels somit ein Injektor für wässrige Harnstofflösung. Der Injektor wird in der Regel mit wässriger Harnstofflösung gespeist, die aus einem mitgeführten Reservoir, also zum Beispiel einem Tankbehälter stammt.

In einer anderen Ausführungsform ist das Mittel zur Bereitstellung eines Reduktionsmittels ein Stickoxidspeicher-Katalysator, der in der Lage ist, aus Stickoxid Ammoniak zu bilden. Solche Stickoxidspeicher-Katalysatoren sind dem Fachmann bekannt und in der Literatur umfassend beschrieben.

Beispielsweise aus SAE-2001-01-3625 ist bekannt, dass die SCR-Reaktion mit Ammoniak schneller verläuft, wenn die Stickoxide in einer 1:1 Mischung aus Stickstoffmonoxid und Stickstoffdioxid vorliegen oder jedenfalls diesem Verhältnis nahekommen. Da das Abgas von mager betriebenen Verbrennungsmotoren in der Regel einen Überschuss von Stickstoffmonoxid gegenüber Stickstoffdioxid aufweist, schlägt das Dokument vor, den Anteil an Stickstoffdioxid mit Hilfe eines Oxidationskatalysators zu erhöhen.

In einer Ausführungsform umfasst die erfindungsgemäße Vorrichtung somit auch einen Oxidationskatalysator. In Ausführungsformen der vorliegenden Erfindung wird als Oxidationskatalysator Platin auf einem Trägermaterial verwendet.

Als Trägermaterial für das Platin kommen alle dem Fachmann für diesen Zweck geläufigen Materialien in Betracht. Sie weisen eine BET-Oberfläche von 30 bis 250 m$^2$/g, bevorzugt von 100 bis 200 m$^2$/g auf (bestimmt nach ISO 9277) und sind insbesondere Aluminiumoxid, Siliziumoxid, Magnesiumoxid, Titanoxid, Zirkonoxid, Ceroxid sowie Mischungen oder Mischoxide aus mindestens zwei dieser Oxide.

Bevorzugt sind Aluminiumoxid und Aluminium/Silizium-Mischoxide. Sofern Aluminiumoxid verwendet wird, so ist es besonders bevorzugt stabilisiert, beispielsweise mit Lanthanoxid.

Die erfindungsgemäße Vorrichtung ist beispielsweise so aufgebaut, dass in Strömungsrichtung des Abgases zuerst der Oxidationskatalysator, dann der Injektor für wässrige Harnstofflösung und dann der erfindungsgemäße Partikelfilter angeordnet sind.

Alternativ sind in Strömungsrichtung des Abgases zuerst ein Stickoxidspeicher-Katalysator und dann der erfindungsgemäße Partikelfilter angeordnet. Bei der Regeneration des Stickoxidspeicher-Katalysators kann unter reduktiven Abgasbedingungen Ammoniak gebildet werden. Oxidationskatalysator und Injektor für wässrige Harnstofflösung sind in diesem Fall entbehrlich.

Die Erfindung wird in den nachstehenden Beispielen und Figuren näher erläutert.

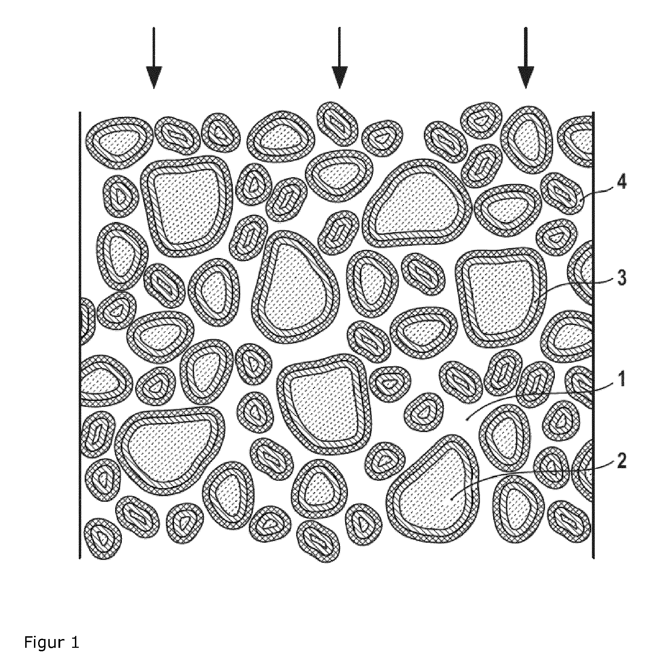

Figur 1    zeigt einen Querschnitt durch die poröse Wand eines erfindungsgemäßen Partikelfilters, der zwei Schichten mit SCR-katalytisch aktivem Material umfasst, wobei

       (1) die Poren der porösen Wand
       (2) die poröse Wand (
       (3) die Schicht mit SCR-katalytisch aktivem Material, die die niedrigere Selektivität aufweist und
       (4) die Schicht mit SCR-katalytisch aktivem Material, die die höhere Selektivität aufweist und Die Pfeile zeigen die Richtung des Abgases

Figur 2    zeigt die NOx-Konvertierung der Katalysatoren K1, VK1 und VK2 (Beispiel 1 und Vergleichsbeispiele 1 und 2)

Figur 3    zeigt den NOx-Umsatz von K2 und VK3 (Beispiel 2 und Vergleichsbeispiel 3), sowie der Katalysatoren VKB und VKC aus Beispiel 2.

Beispiel 1

a) Ein handelsüblicher Wandflussfilter aus Silicium-Carbid mit einer Porosität von 65 % und einer durchschnittlichen Porengröße von 23 $\mu$m wurde mittels eines üblichen Tauchverfahrens mit 60 g/L eines Washcoats beschichtet, der einen Kupfer-ausgetauschten Chabaziten, mit einem $SiO_2/Al_2O_3$-Verhältnis (SAR) von 30, mit einer Kupfermenge von 3 Gew.% (berechnet als CuO und bezogen auf den ausgetauschten Chabaziten) enthielt. Die mittlere Teilchengröße des Kupfer-ausgetauschten Chabaziten betrug 1,16 $\mu$m. Anschließend wurde der beschichtete Wandflussfilter getrocknet und kalziniert.

b) In einem zweiten Schritt wurde das gemäß a) beschichtete Wandflussfilter mit einer zweiten Beschichtung versehen. Dazu wurde mittels eines üblichen Tauchverfahrens mit 60 g/L eines Washcoats beschichtet, der einen Kupfer-ausgetauschten Chabaziten (SAR=30) mit einer Kupfermenge von 1 Gew.% (berechnet als CuO und bezogen auf den ausgetauschten Chabaziten) enthielt. Die mittlere Teilchengröße des Kupfer-ausgetauschten Chabaziten betrug 1,05 $\mu$m. Anschließend wurde der beschichtete Wandflussfilter getrocknet und kalziniert. Über den gesamten Wandflussfilter berechnet betrug die Kupfermenge 2 Gew.% (berechnet als CuO und bezogen auf den ausgetauschten Chabaziten). Der Katalysator wird nachfolgend K1 genannt.

Vergleichsbeispiel 1

Ein handelsüblicher Wandflussfilter aus Silicium-Carbid mit einer Porosität von 65 % und einer durchschnittlichen Porengröße von 23 $\mu$m wurde mittels eines üblichen Tauchverfahrens mit 120 g/L eines Washcoats beschichtet, der einen Kupfer-ausgetauschten Chabaziten (SAR=30) mit einer Kupfermenge von 2 Gew.% (berechnet als CuO und bezogen auf den ausgetauschten Chabaziten) enthielt. Die mittlere Teilchengröße des Kupfer-ausgetauschten Chabaziten betrug 1,06 $\mu$m. Anschließend wurde der beschichtete Wandflussfilter getrocknet und kalziniert. Über den gesamten Wandflussfilter berechnet betrug die Kupfermenge 2 Gew.% (berechnet als CuO und bezogen auf den ausgetauschten Chabaziten)

Der Katalysator wird nachfolgend VK1 genannt.

Vergleichsbeispiel 2

a) Ein handelsüblicher Wandflussfilter aus Silicium-Carbid mit einer Porosität von 65 % und einer durchschnittlichen

Porengröße von 23 $\mu$m wurde mittels eines üblichen Tauchverfahrens auf 50% seiner Länge einlassseitig mit 60 g/L eines Washcoats beschichtet, der einen Kupfer-ausgetauschten Chabaziten (SAR=30) mit einer Kupfermenge von 1 Gew.% (berechnet als CuO und bezogen auf den ausgetauschten Chabaziten) enthielt. Die mittlere Teilchengröße des Kupfer-ausgetauschten Chabaziten betrug 1,05 $\mu$m. Anschließend wurde der beschichtete Wandflussfilter getrocknet und kalziniert.

b) In einem zweiten Schritt wurde das gemäß a) beschichtete Wandflussfilter auch auf dem noch unbeschichteten Teil seiner Länge (50%) auslassseitig mit einer zweiten Beschichtung versehen. Dazu wurde mittels eines üblichen Tauchverfahrens mit 60 g/L eines Washcoats beschichtet, der einen Kupfer-ausgetauschten Chabaziten (SAR=30) mit einer Kupfermenge von 3 Gew.% (berechnet als CuO und bezogen auf den ausgetauschten Chabaziten) enthielt. Die mittlere Teilchengröße des Kupfer-ausgetauschten Chabaziten betrug 1,16 $\mu$m. Anschließend wurde der beschichtete Wandflussfilter getrocknet und kalziniert.

Über den gesamten Wandflussfilter berechnet betrug die Kupfermenge 2 Gew.% (berechnet als CuO und bezogen auf den ausgetauschten Chabaziten)
Der Katalysator wird nachfolgend VK2 genannt.

Bestimmung der $NO_x$-Konvertierung von K1, VK1 und VK2

a) Zunächst wurden K1, VK1 und VK2 16h bei 800°C in hydrothermaler Atmosphäre (10% Wasser, 10% Sauerstoff, Rest Stickstoff) gealtert.

b) Die $NO_x$-Konvertierung des erfindungsgemäßen Partikelfilters K1 und der Vergleichspartikelfilter VK1 und VK1 in Abhängigkeit von der Temperatur vor dem Katalysator wurde in einem Modellgasreaktor im sog. $NO_x$-Umsatztest bestimmt.

Der $NO_x$-Umsatztest besteht aus einer Testprozedur, die eine Vorbehandlung und einem Testzyklus umfasst, der für verschiedene Zieltemperaturen durchlaufen wird. Die applizierten Gasmischungen sind in Tabelle 1 vermerkt.
Testprozedur:

1. Vorkonditionierung bei 600°C unter Stickstoff für 10min
2. Testzyklus, der für die Zieltemperaturen wiederholt wird

   a. Anfahren der Zieltemperatur unter Gasmischung 1
   b. Zuschalten von $NO_x$ (Gasmischung 2)
   c. Zuschalten von $NH_3$ (Gasmischung 3), warten bis $NH_3$-Durchbruch > 20ppm, bzw. maximal 30min Dauer
   d. Temperatur-Programmierte Desorption bis 500°C (Gasmischung 3)

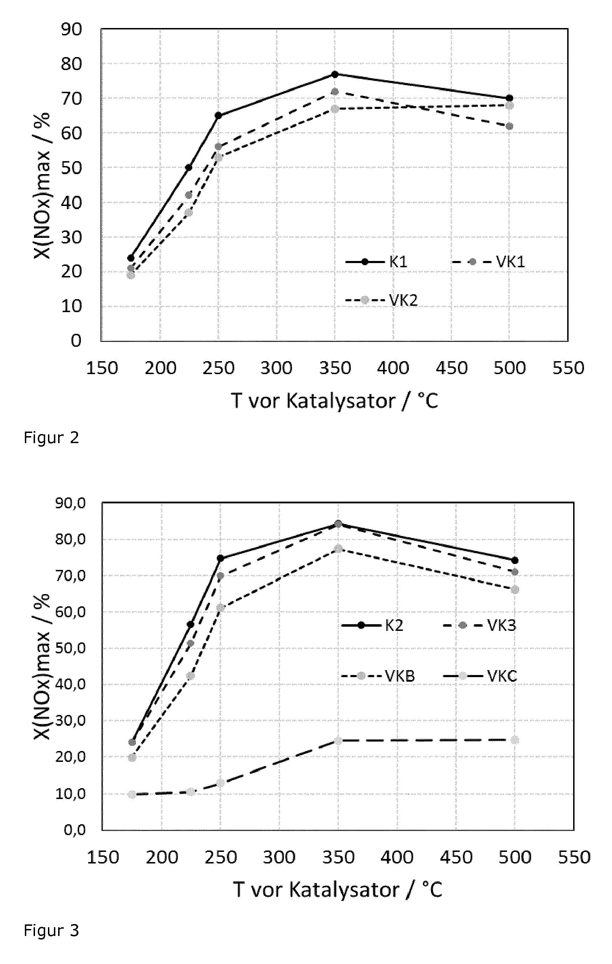

Für jeden Temperaturpunkt wird der maximal-Umsatz für den Testprozedur-Bereich 2c bestimmt. Aus der Auftragung des Maximalen NOx-Umsatzes für die verschiedenen Temperaturpunkte ergibt sich eine Auftragung wie in Abbildung 2 gezeigt.

| Gasmischung | 1 | 2 | 3 |
|---|---|---|---|
| $N_2$ | Balance | Balance | Balance |
| $O_2$ | 10 Vol.-% | 10 Vol.-% | 10 Vol.-% |
| NOx | 0 ppm | 500 ppm | 500 ppm |
| $NO_2$ | 0 ppm | 0 ppm | 0 ppm |
| $NH_3$ | 0 ppm | 0 ppm | 750 ppm |
| CO | 350 ppm | 350 ppm | 350 ppm |
| $C_3H_6$ | 100 ppm | 100 ppm | 100 ppm |
| $H_2O$ | 5 Vol.-% | 5 Vol.-% | 5 Vol.-% |
| GHSV / h-1 | 60.000 | 60.000 | 60.000 |

Wie aus Figur 2 ersichtlich, zeigt K1 im Vergleich zu VK1 und VK2 eine deutlich bessere NOx-Konvertierung.

Beispiel 2

I) Bestimmung der Selektivität in der SCR-Reaktion

a) Ein handelsüblicher Wandflussfilter aus Silicium-Carbid mit einer Porosität von 63 % und einer durchschnittlichen Porengröße von 20 $\mu$m wurde mittels eines üblichen Tauchverfahrens mit 80 g/L eines Washcoats beschichtet, der einen Kupfer-ausgetauschten Chabaziten (SAR=30) mit einer Kupfermenge von 4,5 Gew.% (berechnet als CuO und bezogen auf den ausgetauschten Chabaziten) enthielt. Die mittlere Teilchengröße des Kupfer-ausgetauschten Chabaziten betrug 1,43 $\mu$m. Anschließend wurde der beschichtete Wandflussfilter getrocknet, bei 350°C kalziniert und bei 550°C getempert.
Der Katalysator wird nachfolgend VKB genannt.
b) Ein handelsüblicher Wandflussfilter aus Silicium-Carbid mit einer Porosität von 63 % und einer durchschnittlichen Porengröße von 20 $\mu$m wurde mittels eines üblichen Tauchverfahrens mit 30 g/L eines Washcoats beschichtet, der einen Kupfer-ausgetauschten Chabaziten (SAR=30) mit einer Kupfermenge von 2 Gew.% (berechnet als CuO und bezogen auf den ausgetauschten Chabaziten) enthielt. Die mittlere Teilchengröße des Kupfer-ausgetauschten Chabaziten betrug 1,93 $\mu$m. Anschließend wurde der beschichtete Wandflussfilter getrocknet, bei 350°C kalziniert und bei 550°C getempert.
Der Katalysator wird nachfolgend VKC genannt.
c) Die Katalysatoren VKB und VKC wurden 16 Stunden bei 800°C hydrothermal gealtert und dann deren Umsätze von $NO_x$ und $NH_3$ unter den in der nachfolgenden Tabelle spezifizierten Versuchsbedingungen bestimmt.

| Temperatur | 500 °C |
|---|---|
| $N_2$ | Balance |
| $O_2$ | 10 Vol.-% |
| NOx | 500 ppm |
| $NO_2$ | 0 ppm |
| $NH_3$ | 750 ppm |
| CO | 350 ppm |
| $C_3H_6$ | 100 ppm |
| $H_2O$ | 5 Vol.-% |
| GHSV / h-1 | 60.000 |

Hiernach wurde für VKB und VKC der Quotient aus dem Umsatz von NOx und dem Umsatz von $NH_3$ bestimmt. Folgende Ergebnisse wurden erhalten:

| | VKB | VKC |
|---|---|---|
| $X(NO_x)$ / % | 66,20 | 24,74 |
| $X(NH_3)$/% | 96,18 | 30,06 |
| $X(NO_x)/_x(NH3)$ | 0,69 | 0,82 |

Es zeigte sich, dass VKC einen höheren Quotienten aus den Umsätzen von $NO_x$ und $NH_3$ aufweist als VKB. Somit ist VKC auf die dem Gas zugewandte Seite zu beschichten und VKB auf die dem Wandflussfilter zugewandte Seite.

II) Entsprechend den Ergebnissen gemäß vorstehendem Absatz Ic) wurde ein erfindungsgemäßes Partikelfilter wie folgt erhalten:

Ein handelsüblicher Wandflussfilter aus Silicium-Carbid mit einer Porosität von 63 % und einer durchschnittlichen Porengröße von 20 $\mu$m wurde mittels eines üblichen Tauchverfahrens mit 80 g/L eines Washcoats beschichtet, der einen Kupfer-ausgetauschten Chabaziten (SAR=30) mit einer Kupfermenge von 4,5 Gew.% (berechnet als CuO und bezogen auf den ausgetauschten Chabaziten) enthielt. Die mittlere Teilchengröße des Kupfer-ausgetauschten Chabaziten betrug 1,43 $\mu$m. Anschließend wurde der beschichtete Wandflussfilter getrocknet und bei 350°C kalziniert.

In einem zweiten Schritt wurde das gemäß a) beschichtete Wandflussfilter mit einer zweiten Beschichtung versehen. Dazu wurde mittels eines üblichen Tauchverfahrens mit 30 g/L eines Washcoats beschichtet, der einen Kupfer-ausgetauschten Chabaziten (SAR=30) mit einer Kupfermenge von 2 Gew.% (berechnet als CuO und bezogen auf den ausgetauschten Chabaziten) enthielt. Die mittlere Teilchengröße des Kupfer-ausgetauschten Chabaziten betrug 1,93 $\mu$m. Anschließend wurde der beschichtete Wandflussfilter getrocknet, bei 350°C kalziniert und bei 550°C getempert.

Über den gesamten Wandflussfilter berechnet betrug die Kupfermenge 3,8 Gew.% (berechnet als CuO und bezogen auf den ausgetauschten Chabaziten).

Der Katalysator wird nachfolgend K2 genannt.

Vergleichsbeispiel 3

Ein handelsüblicher Wandflussfilter aus Silicium-Carbid mit einer Porosität von 63 % und einer durchschnittlichen Porengröße von 20 $\mu$m wurde mittels eines üblichen Tauchverfahrens mit 110 g/L eines Washcoats beschichtet, der einen Kupfer-ausgetauschten Chabaziten (SAR=30) mit einer Kupfermenge von 3,8 Gew.% (berechnet als CuO und bezogen auf den ausgetauschten Chabaziten) enthielt. Die mittlere Teilchengröße des Kupfer-ausgetauschten Chabaziten betrug 1,61$\mu$m.) Anschließend wurde der beschichtete Wandflussfilter getrocknet und kalziniert.

Der Katalysator wird nachfolgend VK3 genannt.

Die Bestimmung der $NO_x$-Konvertierung von K2 und VK3 (und von VKB und VKC) wurde wie in Beispiel 1 beschrieben durchgeführt. Das Ergebnis zeigt Figur 3.

**Patentansprüche**

1. Partikelfilter, das einen Wandflussfilter und SCR-aktives Material umfasst, wobei
   das Wandflussfilter Kanäle umfasst, die sich parallel zwischen einem ersten und einem zweiten Ende des Wandflussfilters erstrecken, die abwechselnd entweder am ersten oder am zweiten Ende gasdicht verschlossen sind und die durch poröse Wände getrennt sind, deren Poren innere Oberflächen aufweisen, und
   das SCR-aktive Material sich in Form einer Beschichtung auf den inneren Oberflächen der Poren der porösen Wände befindet,
   **dadurch gekennzeichnet, dass** die Beschichtung einen Gradienten aufweist, so dass die dem Abgas zugewandte Seite der Beschichtung eine höhere Selektivität in der SCR-Reaktion aufweist, als die der inneren Oberfläche der Poren zugewandte Seite der Beschichtung.

2. Partikelfilter gemäß Anspruch 1, **dadurch gekennzeichnet, dass** der Wandflussfilter aus Silicium-Carbid, Aluminium-Titanat oder Cordierit besteht.

3. Partikelfilter gemäß Anspruch 1 und/oder 2, **dadurch gekennzeichnet, dass** der Wandflussfilter in unbeschichtetem Zustand eine Porosität von 30 bis 80 % aufweist.

4. Partikelfilter gemäß einem oder mehreren der Ansprüche 1 bis 3, **dadurch gekennzeichnet, dass** der Wandflussfilter eine durchschnittliche Porengröße in unbeschichtetem Zustand von 5 bis 30 Mikrometer aufweist.

5. Partikelfilter gemäß einem oder mehreren der Ansprüche 1 bis 4, **dadurch gekennzeichnet, dass** das SCR-aktive Material einen kleinporigen Zeolithen umfasst, der mit Kupfer und/oder Eisen ausgetauscht ist.

6. Partikelfilter gemäß Anspruch 5, **dadurch gekennzeichnet, dass** der kleinporige Zeolith dem Strukturtyp AEI, CHA (Chabazit), ERI (Erionit), LEV (Levyne), AFX, DDR oder KFI angehört.

7. Partikelfilter gemäß Anspruch 5 und/oder 6, **dadurch gekennzeichnet, dass** der kleinporige Zeolith ein Aluminosilikat, Silicoaluminophosphate oder Aluminophosphat ist.

8. Partikelfilter gemäß einem oder mehreren der Ansprüche 5 bis 7, **dadurch gekennzeichnet, dass** die Eisen- bzw. Kupfermengen 0,2 bis 6 Gew.-%, berechnet als $Fe_2O_3$ bzw. CuO und bezogen auf das Gesamtgewicht des ausgetauschten kleinporigen Zeolithen, betragen.

9. Partikelfilter gemäß einem oder mehreren der Ansprüche 1 bis 8, **dadurch gekennzeichnet, dass** die Beschichtung aus zwei oder mehr Schichten besteht, die sich hinsichtlich der Selektivität des SCR-aktiven Materials unterscheiden, wobei die äußerste, dem Abgas zugewandte Schicht die höchste Selektivität und die innerste Schicht die niedrigste Selektivität aufweist.

10. Partikelfilter gemäß einem oder mehreren der Ansprüche 1 bis 9, **dadurch gekennzeichnet, dass** die Beschichtung aus zwei Schichten besteht, wobei die dem Abgas zugewandte Schicht eine höhere Selektivität in der SCR-Reaktion aufweist als die der inneren Oberfläche der Poren zugewandte Schicht.

11. Partikelfilter gemäß einem oder mehreren der Ansprüche 1 bis 10, **dadurch gekennzeichnet, dass** Begriff Selektivität definiert als der Quotient aus dem Umsatz von $NO_x$ und dem Umsatz von $NH_3$, also

$$S = X_{(NOx)} / X_{(NH3)}$$

gilt, wobei S die Selektivität, $X_{(NOx)}$ den Umsatz von $NO_x$ in % und $X_{(NH3)}$ den Umsatz von $NH_3$ in % bedeuten.

12. Partikelfilter gemäß Anspruch 11, **dadurch gekennzeichnet, dass** zur Bestimmung von $X_{(NOx)}$ und $X_{(NH3)}$ mit dem SCR-aktiven Material jeder Beschichtung ein Wandflussfilter beschichtet, sodann 16 Stunden bei 800°C hydrothermal gealtert, dann der Umsatz von $NO_x$ bzw. $NH_3$ bei 500°C in einem Testgas der folgenden Zusammensetzung bestimmt

| $N_2$ | Balance |
|---|---|
| $O_2$ | 10 Vol.-% |
| NOx | 500 ppm |
| $NO_2$ | 0 ppm |
| $NH_3$ | 750 ppm |
| CO | 350 ppm |
| $C_3H_6$ | 100 ppm |
| $H_2O$ | 5 Vol.-% |
| GHSV / h-1 | 60.000 |

und anschließend der Quotient $X_{(NOx)} / X_{(NH3)}$ berechnet wird.

13. Partikelfilter gemäß einem oder mehreren der Ansprüche 1 bis 12, **dadurch gekennzeichnet, dass** die Menge der Beschichtung mit SCR-katalytisch aktivem Material 70 bis 150 g/L, bezogen auf das Volumen des Wandflussfilters beträgt.

14. Partikelfilter gemäß einem oder mehreren der Ansprüche 1 bis 13, **dadurch gekennzeichnet, dass** die Beschichtung mit SCR-aktivem Material aus zwei Schichten besteht, die jeweils einen mit Kupfer ausgetauschten kleinporigen Zeolithen enthalten, wobei der kleinporige Zeolith der dem Abgas zugewandten Schicht 0,3 bis 3 Gew.-% Cu, berechnet als CuO und bezogen auf den ausgetauschten Zeolithen dieser Schicht und der kleinporige Zeolith der der inneren Porenoberfläche zugewandten Schicht 0,5 bis 5 Gew.-% Cu, berechnet als CuO und bezogen auf den ausgetauschten Zeolithen dieser Schicht, enthält.

15. Partikelfilter gemäß einem oder mehreren der Ansprüche 1 bis 14, **dadurch gekennzeichnet, dass** die Beschichtung mit SCR-aktivem Material aus zwei Schichten besteht, die jeweils einen mit Kupfer ausgetauschten Zeolithen enthalten, wobei der Zeolith, der in der Schicht enthalten ist, die dem Abgas zugewandt ist, weniger Cu, berechnet als CuO und bezogen auf den ausgetauschten Zeolithen dieser Schicht enthält als der Zeolith, der in der Schicht enthalten ist, die der inneren Porenoberfläche zugewandten ist.

16. Partikelfilter gemäß einem oder mehreren der Ansprüche 1 bis 15, **dadurch gekennzeichnet, dass** die Beschichtung mit SCR-aktivem Material aus zwei Schichten besteht, die jeweils einen mit Kupfer ausgetauschten Zeolithen vom Strukturtyp Chabazit (CHA) enthalten, wobei der Zeolith der dem Abgas zugewandten Schicht weniger als 3 Gew.-

% Cu, berechnet als CuO und bezogen auf den ausgetauschten Zeolithen dieser Schicht und der Zeolith der der inneren Porenoberfläche zugewandten Schicht mehr als 3 Gew.-% Cu, berechnet als CuO und bezogen auf den ausgetauschten Zeolithe dieser Schicht, enthält.

17. Partikelfilter gemäß einem oder mehreren der Ansprüche 1 bis 15, **dadurch gekennzeichnet, dass** die Beschichtung mit SCR-aktivem Material aus zwei Schichten besteht, die jeweils einen mit Kupfer ausgetauschten Zeolithen vom Strukturtyp Levyne (LEV) enthalten, wobei der Zeolith der dem Abgas zugewandten Schicht weniger als 3 Gew.-% Cu, berechnet als CuO und bezogen auf den ausgetauschten Zeolithen dieser Schicht und der Zeolith der der inneren Porenoberfläche zugewandten Schicht mehr als 3 Gew.-% Cu, berechnet als CuO und bezogen auf den ausgetauschten Zeolithe dieser Schicht, enthält.

18. Verfahren zur Reinigung von Abgas von mager betriebenen Verbrennungsmotoren, **dadurch gekennzeichnet, dass** das Abgas über ein Partikelfilter gemäß einem oder mehreren der Ansprüche 1 bis 17 geleitet wird.

19. Vorrichtung zur Reinigung von Abgas von mager betriebenen Verbrennungsmotoren, **dadurch gekennzeichnet ist, dass** sie ein Partikelfilter gemäß einem oder mehreren der Ansprüche 1 bis 17, sowie ein Mittel zur Bereitstellung eines Reduktionsmittel umfasst.

20. Vorrichtung gemäß Anspruch 19, **dadurch gekennzeichnet, dass** das Mittel zur Bereitstellung eines Reduktionsmittels ein Injektor für wässrige Harnstofflösung ist.

21. Vorrichtung gemäß einem der Anspruch 19 und/oder 20, **dadurch gekennzeichnet, dass** sie einen Oxidationskatalysator umfasst.

22. Vorrichtung gemäß Anspruch 19, **dadurch gekennzeichnet, dass** das Mittel zur Bereitstellung eines Reduktionsmittels ein Stickoxid-Speicherkatalysator ist.

Figur 1

Figur 2

Figur 3

Europäisches
Patentamt

European
Patent Office

Office européen
des brevets

# EUROPÄISCHER RECHERCHENBERICHT

Nummer der Anmeldung

EP 16 18 3868

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2010/077737 A1 (GIRARD JAMES W [AT] ET AL) 1. April 2010 (2010-04-01)<br>* das ganze Dokument *<br>* Absätze [0016], [0018], [0024], [0025], [0029], [0032] *<br>* Abbildung 1 *<br>* Ansprüche *<br>----- | 1-3,5,<br>9-22<br>2-4 | INV.<br>B01J35/00<br>B01J37/02<br>B01J29/72<br>B01J29/56<br>B01J29/85<br>B01J29/83<br>B01J29/89 |
| Y | US 2012/186229 A1 (PHILLIPS PAUL RICHARD [GB] ET AL) 26. Juli 2012 (2012-07-26)<br>* das ganze Dokument *<br>* Absatz [0047] *<br>----- | 2-4 | B01D53/94<br>B01J35/04<br>F01N3/20 |
| X | JP 2013 139035 A (NE CHEMCAT CORP) 18. Juli 2013 (2013-07-18)<br>* das ganze Dokument *<br>* Absätze [0001], [0018], [0019], [0022], [0037], [0038], [0051] *<br>----- | 1-22 | |
| A | WO 2011/128026 A1 (UMICORE AG & CO KG [DE]; PFEIFER MARCUS [DE]; BASSO STEPHAN [DE]; DORN) 20. Oktober 2011 (2011-10-20)<br>* das ganze Dokument *<br>* Ansprüche *<br>----- | 1-22 | RECHERCHIERTE SACHGEBIETE (IPC)<br><br>B01J<br>B01D<br>F01N |
| A | EP 2 597 279 A1 (DEUTZ AG [DE]) 29. Mai 2013 (2013-05-29)<br>* das ganze Dokument *<br>* Absätze [0032] - [0035] *<br>----- | 1-22 | |
| E | WO 2016/138418 A1 (BASF CORP [US]) 1. September 2016 (2016-09-01)<br>* das ganze Dokument *<br>* Seite 21, Zeile 16 - Seite 22, Zeile 8 *<br>----- | 1-22 | |
| E | EP 3 081 775 A1 (TOYOTA MOTOR CO LTD [JP]) 19. Oktober 2016 (2016-10-19)<br>* das ganze Dokument *<br>* Absatz [0030] *<br>----- | 1-22 | |

Der vorliegende Recherchenbericht wurde für alle Patentansprüche erstellt

| Recherchenort | Abschlußdatum der Recherche | Prüfer |
|---|---|---|
| München | 24. Januar 2017 | Gosselin, Daniel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 18 3868

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2017

| Im Recherchenbericht angeführtes Patentdokument | Datum der Veröffentlichung | Mitglied(er) der Patentfamilie | Datum der Veröffentlichung |
|---|---|---|---|
| US 2010077737 A1 | 01-04-2010 | DE 102009043410 A1<br>US    2010077737 A1<br>US    2012275978 A1 | 01-04-2010<br>01-04-2010<br>01-11-2012 |
| US 2012186229 A1 | 26-07-2012 | CN      103781532 A<br>EP        2736628 A1<br>JP     2014528350 A<br>KR    20140064796 A<br>RU     2014107749 A<br>US    2012186229 A1<br>US    2014227155 A1<br>WO    2013014467 A1 | 07-05-2014<br>04-06-2014<br>27-10-2014<br>28-05-2014<br>10-09-2015<br>26-07-2012<br>14-08-2014<br>31-01-2013 |
| JP 2013139035 A | 18-07-2013 | JP        5651727 B2<br>JP     2013139035 A | 14-01-2015<br>18-07-2013 |
| WO 2011128026 A1 | 20-10-2011 | BR 112012025871 A2<br>CN      102762827 A<br>EP        2558691 A1<br>US    2013004391 A1<br>WO    2011128026 A1 | 28-06-2016<br>31-10-2012<br>20-02-2013<br>03-01-2013<br>20-10-2011 |
| EP 2597279 A1 | 29-05-2013 | EP        2597279 A1<br>US    2015283507 A1<br>WO    2013075803 A1 | 29-05-2013<br>08-10-2015<br>30-05-2013 |
| WO 2016138418 A1 | 01-09-2016 | KEINE | |
| EP 3081775 A1 | 19-10-2016 | CN      106050368 A<br>EP        3081775 A1<br>US    2016303509 A1 | 26-10-2016<br>19-10-2016<br>20-10-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005016497 A
- US 2011274601 A
- WO 2008049491 A1
- WO 2008061752 A2
- WO 2011116907 A2
- WO 2011131324 A1
- WO 2009124643 A1
- EP 2335810 A1
- WO 2012168277 A1